# FASCICULE DE BREVET EUROPEEN

(11) **EP 2 731 757 B1**
(45) Date de publication et mention de la délivrance du brevet: **24.02.2016**
(21) Numéro de dépôt: 12744053.5
(22) Date de dépôt: 05.07.2012
(51) Int. Cl.: B25J 9/04, B25J 9/10

(54) **TABLE MOTORISEE POUR LE POSITIONNEMENT MICROMETRIQUE**
MOTORBETRIEBENER TISCH FÜR MIKROMETRISCHE POSITIONIERUNG
MOTOR-DRIVEN TABLE FOR MICROMETRIC POSITIONING

(30) Priorité: 11.07.2011 FR 1102184
(43) Date de publication de la demande: 21.05.2014
(73) Titulaire: Université du Havre, 76063 Le Havre (FR)
(72) Inventeur: BRETHE, Jean-François, F-76063 Le Havre (FR)
(74) Mandataire: Fidal Innovation
(86) Numéro de dépôt international: PCT/FR2012/051585
(87) Numéro de publication internationale: WO 2013/007931

(56) Documents cités:
- FR-A1- 2 930 472
- US-B1- 6 400 115

## Description

### Domaine de l'invention

La présente invention concerne le domaine des robots à bras articulé pour le positionnement précis de pièces en vue de leur manipulation ou de leur usinage par exemple.

### Etat de la technique

On connaît dans l'état de la technique le brevet américain US4523100 décrivant un robot comportant un bras articulé pour le déplacement dans un espace à trois dimensions. Le bras présente plus de quatre articulations motorisées.

Le bras présente une extrémité terminale pouvant être positionnée et maintenue dans les limites de tolérance proche d'une position de coordonnée désirée. Un détecteur est monté à l'extrémité terminale pour la détection d'un faisceau de lumière. L'extrémité terminale est déplacée d'abord à l'intérieur des limites de tolérance par le bras du robot, puis le bras est bloqué et la position de l'extrémité terminale est ajustée pour assurer le positionnement selon les coordonnées souhaitées.

On connaît également dans l'état de la technique le brevet français FR 2930472 décrivant un robot comportant un bras articulé pour le déplacement d'une extrémité dans un espace à N dimensions comprenant au moins N+1 articulations motorisées, ainsi qu'un calculateur pour commander les déplacements desdites articulations motorisées, ledit calculateur commande une première étape de prépositionnement de l'extrémité terminale du bras articulé et une deuxième étape de positionnement fin.

Un mode de réalisation de ce robot manipulateur et la commande associée pour un positionnement fin de l'extrémité terminale correspond, dans le cas du positionnement plan, à un robot SCARA redondant, où le premier axe doublé permet d'obtenir des performances en répétabilité et résolution spatiale nettement améliorées par rapport à l'existant (facteur 5).

### Inconvénients des solutions de l'art antérieur

Dans les solutions de l'art antérieur, soit la chaîne cinématique proposée pour le positionnement fin correspond à une structure qualifiée de macro-micro où le nombre d'actionneurs est généralement le double du nombre de degré de liberté à contrôler, soit le nombre d'actionneur est supérieur d'une unité au nombre de degrés de liberté à contrôler mais la zone où le positionnement fin est obtenu est réduite et correspond à une faible portion de l'espace de travail (environ 10%).

Elles ne permettent pas de réaliser un équipement intégré où tout point de l'espace de travail correspondant au plateau peut être amené dans la zone d'intérêt afin de bénéficier d'un positionnement fin.

### Autres solutions connues et inconvénients

On connaît également, en robotique de précision, un type d'ensemble robotique constitué de deux liaisons prismatiques dans deux directions perpendiculaires X et Y, généralement assemblées à partir de deux plateaux superposés.

La rotation de l'objet est obtenue soit par un plateau rotatif monté sur le second plateau, soit par un dispositif motorisé directement intégré sur l'axe vertical.

Dans ces deux cas, des inconvénients sont à déplorer :
1. si la rotation est intégrée sur l'axe vertical :
   a. l'intégration mécanique est délicate et nécessite un haut degré de technicité pour intégrer sur un même axe porteur les deux fonctionnalités de translation et rotation ou pour garantir le parallélisme entre l'axe de translation et l'axe de rotation. L'intégration des deux fonctionnalités sur le même axe fait par exemple l'objet du brevet Palau et al (EP 1 852 225 A1).
   b. Si la saisie d'un objet ou l'amenée d'un outil a lieu alors que le centre de l'objet ou l'outil considéré ne se trouve pas exactement sur l'axe de rotation du porteur vertical, la correction de l'orientation de l'objet se traduit par une rotation par rapport à un axe ne passant pas par le centre de gravité de l'objet, et peut aboutir à la nécessité d'un nouveau réglage du positionnement plan xy du centre de gravité, au détriment du temps de cycle global de l'opération à mener. La modification de l'orientation d'un objet en gardant constante la position de son centre de gravité ne fait pas alors seulement intervenir la rotation autour du dernier axe vertical.
2. si la rotation est obtenue par un module motorisé et intercalé dans la chaîne cinématique globale de la table
   a. si le centre de l'objet à saisir n'est pas situé sur l'axe de rotation dudit module, la correction de l'orientation amène systématiquement à reprendre le réglage du positionnement plan xy avec les mêmes inconvénients sur la durée du temps de cycle.
   b. Si le centre de l'objet à saisir doit nécessairement se situer sur l'axe de rotation, cela implique implicitement que l'on utilise qu'une partie très réduite de l'espace de travail et ceci est un inconvénient notoire. Par exemple, dans des opérations de productronique où des soudures doivent être effectuées en plusieurs endroits d'une carte électronique, cela supposerait qu'un repositionnement de chaque point de soudure sur l'axe de rotation dudit module ait lieu avant chaque opération.

Dans les cas ci-dessus, l'empilement de différents modules pose outre les problèmes d'assemblage classiques (tolérances mécaniques sur les perpendicularités, repérage précis des axes de rotation), des problèmes de dimensionnement de structure conduisant, dans le cas de structures séries à des ensembles mécaniques en mouvement massifs et lourds par rapport aux masses utiles à déplacer et à un espace de travail généralement assez réduit par rapport à l'encombrement de l'ensemble du dispositif, dû à la permanence des guidages linéaires.

De plus mécaniquement, le coût de telles liaisons glissières est élevé car cela nécessite la plupart du temps des usinages de portées de guidage linéaire extrêmement soignés et la mobilisation de moyens métrologiques très précis pour garantir la planéité, la linéarité et les perpendicularités. La réalisation mécanique de liaisons glissières est beaucoup plus onéreuse que la réalisation mécanique de liaisons pivot utilisées dans le dispositif présenté, notamment en raison du système de portée ayant pour fonction de guider linéairement le dispositif et du système de traction ayant pour fonction de le déplacer ; par exemple, les vis à billes généralement utilisées nécessitent des usinages à fortes tolérances sans compter la mise en place des systèmes de recirculation des billes, dont la fiabilité peut poser problème sur le long terme et est sujette en outre à des limitations dynamiques. Ceci est une conséquence des technologies d'usinage car il est bien connu qu'une pièce obtenue par tournage et rectification peut à coût de manufacture égal obtenir de bien meilleures tolérances qu'une pièce usinée par fraisage. D'autre part, l'intégration des capteurs codeurs rotatifs est aujourd'hui plus facile et meilleur marché sur des actionneurs rotatifs que sur des actionneurs linéaires.

On connaît aussi des dispositifs de positionnement précis basés sur des architectures parallèles. L'avantage de ce type de porteur est que le rapport de la charge utile sur l'ensemble des masses en mouvement est beaucoup plus important comparativement à une architecture série car généralement les actionneurs sont fixés sur le bâti. Cependant ces structures souffrent d'un espace de travail réduit et n'ont pas démontré jusqu'à présent des avantages décisifs en terme de répétabilité/résolution spatiale alors que d'autres inconvénients sont bien connus, notamment les déformations des bras sous l'effet d'efforts de flexion.

Du point de vue de la compacité, le dispositif présenté est aussi extrêmement performant puisque l'ensemble de la chaîne cinématique vue de dessus reste confiné sous le plateau lorsque le dispositif est en état de fonctionnement.

### Solution apportée par l'invention

Afin de répondre aux inconvénients de l'art antérieur, l'invention se caractérise en ce que la chaîne cinématique supportant le plateau comporte 4 axes de rotation motorisés permettant d'orienter et positionner n'importe quel objet situé à l'intérieur de l'espace de travail (i.e. le plateau) sous l'axe vertical où descend l'outil. Il s'agit du nombre minimum d'axes pouvant être utilisé pour bénéficier d'un positionnement en position et en orientation simultané avec des performances en répétabilité de pose et résolution spatiale nettement supérieures à l'état de l'art existant.

A cet effet, l'invention concerne selon son acception la plus générale un ensemble robotique selon la revendication 1.

De préférence les deux premiers axes motorisés sont reliés par un bras de longueur inférieure aux deux bras suivants.

Selon un mode de réalisation particulier, la longueur du premier bras est comprise entre 20 et 40 millimètres et la longueur des deux bras suivants est comprise entre 80 et 160 millimètres, pour une table d'une dimension comprise entre 200x200 millimètres et 400x400 millimètres.

Avantageusement, les longueurs des trois bras sont inégales et déterminées de façon à ce que l'axe vertical portant l'outil descende sur un point d'intérêt.

Le point d'intérêt est un point situé près de l'axe de rotation du premier axe, optimalement sur le cercle de rayon égal à la distance entre les deux premiers axes divisée par la racine carrée de 2, permettant de bénéficier de l'ensemble des avantages du brevet FR 2930472 concernant la structure porteuse du plateau.

Selon un mode de réalisation préféré, l'ensemble robotique selon l'invention comporte des moyens pour commander les axes motorisés selon une séquence comprenant un positionnement grossier de l'objet au voisinage du point d'intérêt, puis un réglage de l'orientation de l'objet supporté par le plateau par rotation instantanée autour d'un axe passant par le point d'intérêt en commandant les quatre axes de rotation motorisés puis à configurer le bras porte-outil en position de réglage fin en amenant la position angulaire a1 du premier bras à + pi/4 radian ou - pi/4 radian par rapport à la position angulaire du point d'intérêt, puis à bloquer mécaniquement les deux axes terminaux et à opérer un positionnement fin en xy en agissant sur les deux premiers axes de rotation uniquement.

Selon une variante, l'ensemble comprend des moyens pour commander ladite étape de réglage fin de façon à assurer le passage par un point d'harmonisation ou par une calibration locale.

De préférence, ladite chaîne cinématique de déplacement du plateau est du type série comportant 4 liaisons rotoïdes parallèles et perpendiculaires au plateau (1), mais toute autre variante de conception permettant de bénéficier des avantages simultanés de la construction d'un point d'intérêt et de l'amenée de tout point du plateau sur ledit point d'intérêt peut être considérée.

### Description détaillée d'un exemple non limitatif de réalisation de l'invention

L'invention sera mieux comprise à la lecture de la description qui suit, se référant aux dessins annexés relatifs à un exemple non limitatif de réalisation, où :
- la figure 1 représente une vue schématique de l'invention en perspective
- la figure 2 représente une vue de dessus de la position des axes motorisés dans une configuration particulière
- La figure 3 représente une vue de deux configurations différentes correspondant au même point de l'espace de travail mais permettant de s'éloigner d'une singularité.
- La figure 4 représente une vue de dessus d'une configuration optimale utilisée pour le réglage fin du positionnement xy
- La figure 5 représente les localisations de différents outils sur un cercle centré sur l'axe 1,
- La figure 6 représente un carrousel permettant de placer les extrémités d'outils sur un ou des points d'intérêt,

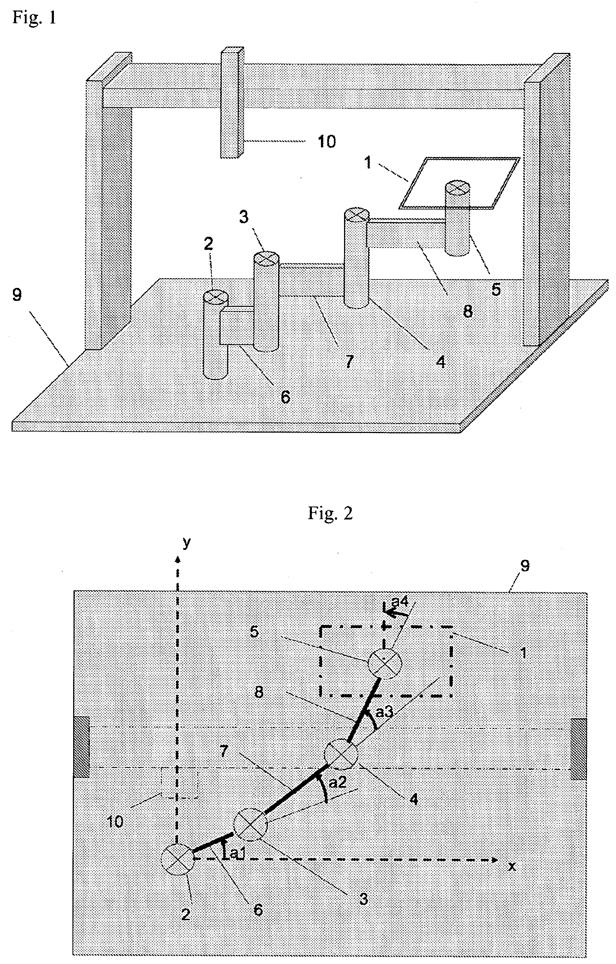

L'ensemble robotique selon l'invention est illustré par les figures 1 à 6.

Il comprend un bâti rigide (9) et :
- un plateau (1) de dimension 300 mm x 300 mm pouvant supporter différents objets (notamment des composants électroniques, MEMS) pouvant être positionnés en orientation avec une résolution/répétabilité angulaire de l'ordre de 1' d'arc et en position XY avec une résolution spatiale/répétabilité de l'ordre de 1 à 2 microns.
- un porte-outil mobile selon un axe vertical (10) animé d'un mouvement de translation permettant de positionner un outil afin de réaliser des opérations sur des objets (usinage, soudure et câblage de type « wire bonding, etc) ou de saisir/déposer un objet (« pick and place »)
- de quatre axes de rotation motorisés (2 à 5) supportant le plateau suivant une chaîne cinématique série
- de trois bras de liaison (6 à 8).

Les longueurs des bras de la chaîne cinématique sont de 30 mm pour le premier bras (6), 120 mm pour le deuxième bras (7) et pour le troisième bras (8).

Le dispositif ainsi conçu dispose d'une infinité de points d'intérêt situés sur le cercle de rayon 30 mm divisée par la racine carrée de 2. Quatre positions du point d'intérêt situées aux positions angulaires égales à 0 modulo pi/2 par rapport aux axes principaux du bâti sont particulièrement intéressantes car elles permettent d'obtenir directement le positionnement fin découplé dans les directions principales du bâti, généralement notées x et y.

Dans la suite de la description, lorsqu'on emploiera le terme « positionner un objet », il faudra comprendre l'ensemble des opérations que l'on peut réaliser avec ou sur un objet (pose, dépose, usinage, soudage, contrôle visuel, etc) grâce à un outil (préhenseur, outil d'usinage, de mesure, de vision, de contrôle, de soudage, etc).

D'un point de vue dynamique, le déport des fonctionnalités outils sur un porte-outil mobile selon un axe vertical (10) lié au bâti allège la structure robotique. Il est possible de travailler avec des outils ayant une masse importante, ce qui ne serait pas le cas si on avait décidé d'utiliser un robot classique type SCARA pour déplacer l'outil sur une surface de travail correspondant au plateau. Dans ce dernier cas de figure, les articulations auraient due être surdimensionnées pour emporter la charge utile. On se trouverait confronté à des contraintes dynamiques et par voie de conséquence, structurelles importantes, identiques à celles que l'on rencontre habituellement en robotique de manipulation avec des porteurs dits série.

Cette conception est particulièrement adaptée au secteur de la productronique où les pièces manipulées sont de très faible masse (quelques grammes maximum) alors que les outils utilisés sont d'une masse beaucoup plus forte (centaine de gramme voire kilogramme) .

Cette conception permet l'implémentation d'une chaîne cinématique de faible masse et par voie de conséquence, diminue aussi les puissances exigées des actionneurs, diminuant d'autant les masses... Ceci étant, les performances dynamiques de la table sont élevées avec des temps de cycle extrêmement réduits tout en garantissant un haut degré de précision. L'ensemble de ces performances est intéressant pour une utilisation dans le secteur productronique.

L'invention se traduit de manière remarquable par l'utilisation d'une chaîne cinématique série comportant 4 articulations rotoïdes verticales pour emporter un plateau et le déport de l'axe vertical (10) supportant un outil sur le bâti.

Classiquement en robotique une telle chaîne aurait été constituée du nombre minimum d'articulations soit 3, afin de pouvoir réaliser les positionnements angulaire et suivant deux directions horizontales X et Y. Cependant, dans ce cas, l'existence de singularités dans l'espace atteignable aurait contraint le constructeur, soit à restreindre considérablement l'espace de travail réel, soit à garder l'intégralité de l'espace de travail avec la présence de zones très proches des singularités. Lorsque les trajectoires sont voisines des singularités, les inconvénients sont bien connus en robotique : il existe un risque fort de ne pas réussir l'interpolation linéaire cartésienne car certains axes fortement sollicités ne peuvent pas tenir les contraintes dynamiques de l'asservissement. Ceci oblige donc à réduire fortement les performances dynamiques du robot. D'autre part, les déplacements de la chaîne cinématique en mouvement sont extrêmement importants alors que le point final se déplace sur une longueur faible et cela donne l'impression que le robot est « incontrôlable », pouvant conduire à un arrêt préventif par l'opérateur. Le passage par une singularité peut amener à un changement de posture (gauche/droite). Enfin, le passage au voisinage de singularités sollicite fortement les articulations en raison d'importants efforts dynamiques induits, avec leur corollaire en terme de vibrations, etc. Au final, les conséquences sont de deux types :
- le temps de cycle augmente
- les composants mécaniques sont fortement sollicités et la fiabilité du robot chute.

L'ensemble robotique proposé s'appuie sur une chaîne cinématique redondante possédant au minimum 4 actionneurs rotatifs.

Deux avantages de la redondance peuvent être utilisés au cours du positionnement.

Premièrement, la redondance peut permettre d'éviter des points singuliers placés dans l'espace de travail. En effet, une fois la position et l'orientation de l'objet fixées par l'opérateur, la position du centre du plateau (1) est alors parfaitement déterminée. Par-contre, en raison de la redondance, il existe une infinité de posture pour la chaîne cinématique (6 7 8) permettant de positionner le centre du plateau (1) à la position désirée. Dès lors, en mode déplacement grossier où les 4 axes peuvent être actionnés, il est possible de diminuer les contraintes dynamiques en choisissant une trajectoire éloignée des positions singulières parmi l'ensemble des trajectoires possibles.

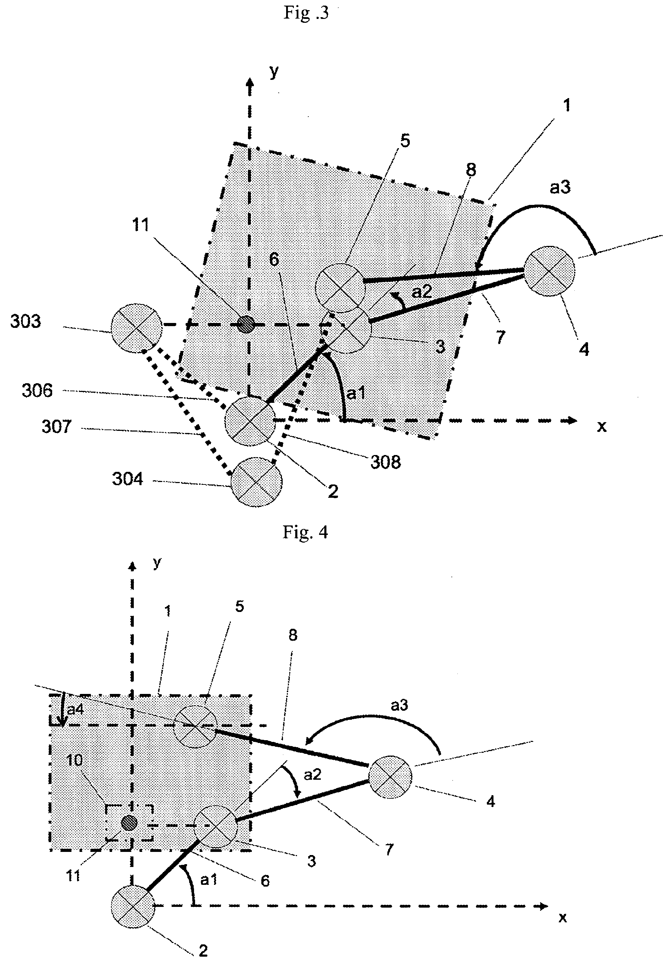

Les problèmes évoqués plus haut pourraient en particulier se poser lorsque l'axe de rotation (5) du plateau est proche de l'axe de rotation du deuxième axe (3) comme illustré sur la fig.3. Cette posture correspond à un point singulier de la chaîne cinématique constituée des bras (7) et (8) lorsque l'angle a3 vaut 180°. Pour supprimer les inconvénients induits par le passage à proximité de cette singularité déjà cités plus haut, il est possible d'éviter la configuration représentée par la chaîne cinématique (6,7,8,1) où l'angle a1 vaut pi/4 et d'utiliser la configuration représentée par la chaîne cinématique (306,307,308,1) où l'angle a1 vaut 3pi/4. Il est donc toujours possible de choisir l'une de ces deux configurations afin de procéder au réglage fin dans la phase finale sans se trouver au voisinage d'une singularité.

Deuxièmement, la redondance permet de bénéficier des avantages de l'invention décrite dans le brevet FR 2930472: les longueurs des trois bras sont inégales et calculées de telle sorte que l'axe vertical (10) portant l'outil descende sur un point dénommé point d'intérêt comme illustré sur la figure 4. Le point d'intérêt (11) est situé à une distance de 30 mm divisé par racine carrée de 2 sur l'axe y. En phase de positionnement fin, le triangle formé par les deux premiers axes (2) et (3) et le point d'intérêt (11) est rectangle isocèle. Aussi deux configurations sont possibles lors de la phase de positionnement fin : l'une où l'angle a1 vaut 45° et l'autre où l'angle a1 vaut 135°. Lorsque la chaîne cinématique (7,8,1) est mécaniquement bloquée, elle constitue un solide à l'extrémité d'une chaîne articulée série comportant les deux premiers axes (2) et (3). Dès lors, les déplacements élémentaires autour de l'axe (2) permettent de régler finement la position de l'objet dans la direction x et les déplacements élémentaires autour de l'axe (3) permettent de régler finement la position de l'objet dans la direction y. Les longueurs des bras de levier amplifiant les erreurs angulaires correspondent aux distances entre le point d'intérêt et les axes (2) ou (3), soit 30 mm divisé par racine carrée de 2. Ces distances étant environ 6 fois inférieures aux longueurs des bras (7) et (8), les écarts de position induits sont 6 fois inférieurs à ceux qui auraient été obtenus par une chaîne articulée constituée de ces deux derniers bras.

L'espace de travail correspond au plateau (1) embarqué au bout de la chaîne articulée. Tout point du plateau peut être positionné au niveau du point d'intérêt avec une orientation choisie. Ainsi il est possible d'amener tout objet au voisinage du point d'intérêt pour le positionner finement dans le plan xy et en orientation.

La démarche de positionnement est alors la suivante :
1. considérer un point quelconque de l'espace de travail du plateau
2. amener ce point sur le point d'intérêt (11) au tombé de l'axe vertical en utilisant les quatre axes motorisées (2 à 5).
3. régler l'orientation de l'objet par rotation instantanée autour d'un axe passant par le point d'intérêt en commandant les quatre axes de rotation motorisés (2 à 5)
4. configurer le bras en position de réglage fin en amenant le bras 1 à pi/4 ou 3pi/4 puis en bloquant mécaniquement les axes 3 et 4.
5. agir uniquement sur les axes 1 et 2 pour effectuer un réglage fin en x et y. s

Les étapes 2 et 3 peuvent être réalisées en une seule fois par commande des 4 axes de rotation motorisés.

Au niveau de l'étape 5 précédente et suivant la technologie choisie pour le réducteur (engrenages planétaire, Harmonic Drive ou autre), la qualité de la réalisation mécanique, le choix de la motorisation et des codeurs, au total la performance d'ensemble de l'asservissement, on peut obtenir un réglage fin par incréments directs extrêmement faibles (micron après micron) ou il faut recourir au passage par un point d'harmonisation intermédiaire tirant partie de la fine résolution spatiale et solutionnant ainsi le problème de zone morte. En effet, un certain nombre de phénomènes comme le jeu des engrenages planétaires, l'hystérésis et l'élasticité des réducteurs de précision de type « Harmonic Drive », les frottements entre les différentes pièces de l'ensemble servo-moto-réducteur, la charge sur l'arbre réducteur sortant peuvent dans certaines situations permettre un déplacement de l'axe moteur sans que la sortie du réducteur ne bouge. On parle de zone morte. Elle peut correspondre suivant les cas à un intervalle angulaire de 5 à 20 quadrangles « quadcounts » au niveau des codeurs. Pour pouvoir se repositionner à une distance plus faible que la zone morte, il est nécessaire de reculer sur un point situé par exemple à une distance supérieure à 10 fois la zone morte observée puis de revenir en suivant exactement la même trajectoire qu'à l'aller mais avec une consigne finale légèrement modifiée. De cette manière on exploite la fine résolution spatiale sans que le mouvement à effectuer ne se situe dans la zone morte.

A l'issue de l'étape 4, il est aussi possible d'utiliser une calibration dans un repère local permettant ensuite dans la phase de positionnement fin de se déplacer directement dans ce repère local vers la cible finale sans avoir besoin d'utiliser un point d'harmonisation. L'ensemble de ces mouvements peut aussi s'enchaîner dynamiquement.

Dans une version de la table, les axes 3 et 4 sont maintenus bloqués mécaniquement par un frein électromagnétique à manque de courant fixé sur l'axe moteur en amont des réducteurs de précision de type « Harmonic Drive ». Cependant tout autre dispositif mécanique peut être utilisé. Dans certains cas, on peut se passer de frein si le réducteur offre un couple de réversibilité suffisamment élevé, apte à s'opposer aux effets dynamiques induits par le déplacement fin de la table. Un blocage des axes 3 et 4 par asservissement sur une consigne fixe ne permet pas toujours d'éviter l'absence de micro-mouvements dans la phase de réglage fin et pourrait faire perdre le bénéfice du dispositif. Dans une version du dispositif, on peut doter les axes 1 et/ou 2 d'un dispositif de blocage mécanique afin de procéder au réglage fin dans une seule direction privilégiée, la position dans l'autre direction restant constante.

Afin de diminuer encore les masses embarquées, il est possible dans une variante de faire reposer le plateau sur un système de billes porteuses ou tout autre système équivalent permettant de supporter les effets de la gravité.

Dans une version du dispositif, les câbles (alimentation, effet Hall, codeurs, etc) de l'ensemble servomoteur de l'axe (5) arrivent sur un côté de la table et le motoréducteur est solidaire du plateau. Cela permet un réglage de l'orientation dans une plage généralement comprise entre -180° et +180° sans générer de problème d'enroulement de câble autour du moteur.

Dans une version particulière du dispositif, il est possible de fixer le motoréducteur 3 de l'articulation (4) sur le bras (7) et de faire circuler les câbles en direction de l'axe du motoréducteur 2 de l'articulation (3) et de traverser via un connecteur tournant dans l'arbre creux du réducteur. Cela permet à la chaîne cinématique constituée des bras (7) et (8) d'opérer des rotations sans limitations dues aux enroulements de câbles.

Dans une autre version du dispositif, le motoréducteur de l'axe (5) est solidaire du bras (8) et les câbles d'alimentation traversent les réducteurs des axes (3) et (4) via des connecteurs tournants insérés dans les arbres creux des réducteurs ; de même, il est possible de fixer le motoréducteur 3 de l'articulation (4) sur le bras (7) et de faire circuler les câbles vers l'amont de la chaîne cinématique via ces mêmes connecteurs tournants. Cela permet au plateau et à la chaîne cinématique constituée des bras (7) et (8) d'opérer des rotations sans limitations dues aux enroulements de câbles.

Dans une version instrumentée du dispositif, il est possible d'adjoindre une caméra ou un appareil photographique à très haute résolution (supérieure à 2 microns) afin de piloter la table dans la dernière étape de positionnement fin à l'aide des informations résultantes. Un avantage notoire de ce type de solution est que l'appareil de vision est fixe sur le bâti et ne subit pas les contraintes mécaniques d'une caméra embarquée au bout du robot comme on le retrouve parfois sur des robots SCARA destinés au secteur de la productronique.

Dans une réalisation alternative, la table est destinée à être mue en position et en orientation mais le porte-outil et éventuellement le système de vision ne sont pas solidaires du bâti, les propriétés de positionnement fin au voisinage du point coïncidant avec le point d'intérêt demeurant exploitées.

Dans une réalisation alternative, la chaîne cinématique supportant la table comprend plus d'articulations que les quatre articulations rotoïdes verticales décrites, le principe et les avantages du dispositif restant valables.

Dans une réalisation alternative, l'axe motorisé amenant l'outil n'est pas vertical mais permet une amenée de l'outil dans une zone proche du point d'intérêt, ou encore l'outil est situé à l'extrémité d'une autre chaîne cinématique articulée motorisée permettant de l'amener dans une zone proche du point d'intérêt.

Dans une réalisation alternative, l'axe motorisé amenant l'outil n'est pas fixé sur le même bâti que la chaîne supportant le plateau.

Dans une réalisation alternative, le plateau se réduit au carré nord-ouest du plateau précédent ou à tout autre type de forme géométrique permettant de bénéficier des avantages de l'invention sur un espace de travail plus réduit et non forcément symétrique.

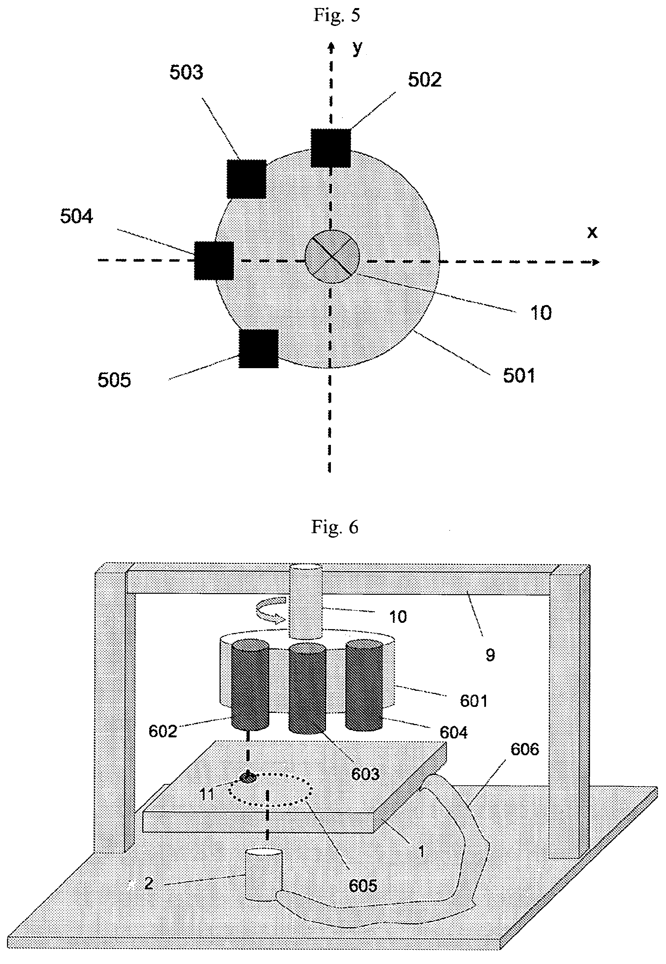

Dans une réalisation alternative illustrée par la fig.5, le bâti supporte plusieurs porte-outil (502 à 505) ayant leur propre système d'actionnement et pouvant être placés sur le cercle (501) de rayon 30 mm divisé par racine carrée de 2 et centré sur le premier axe (2), permettant d'effectuer plusieurs opérations distinctes nécessitant un positionnement fin sans avoir à changer d'outils, l'angle a1 étant réglé de telle manière que le triangle constitué du centre du premier axe de rotation (2), du centre du deuxième axe de rotation (3) et du centre du porte-outil (10) soit rectangle isocèle.

Dans une réalisation alternative, l'axe vertical (10) peut disposer d'un seul système d'actionnement et supporter un module mécanique sur lequel se trouvent distribués différents outils ayant leur extrémité tombant sur un point du cercle (501) précédemment décrit, ce point étant alors de facto défini comme point d'intérêt (11).

Dans une réalisation alternative, l'axe vertical fixé au bâti (9) comporte un module mécanique rotatif comme illustré par la fig.6, par exemple un carrousel (601), permettant d'amener par rotation différents outils (602 à 604) au dessus d'un point du cercle (605) centré sur le premier axe, dont le rayon est L/racine de 2, où L désigne la longueur du premier bras (6). Ce point est alors considéré de facto comme le point d'intérêt (11) par rapport au plateau relié à l'axe (2) par la chaîne cinématique (606). Le dispositif peut être complété par une caméra fixe visant la scène.

## Revendications

1. Ensemble robotique comprenant :
- un plateau (1) équipé de moyens de solidarisation d'un objet à positionner selon une orientation et une position XY prédéterminées avec une résolution spatiale et une répétabilité inférieure à 0,34 minutes d'arc en orientation et 5 microns en position,
- quatre axes de rotation motorisés parallèles (2 à 5) reliés deux à deux par trois bras (6 à 8) suivant une chaîne cinématique série, le plateau (1) étant supporté par l'axe extrémal (5)
- un bâti (9) solidaire d'une part du premier axe de rotation motorisé (2) et d'autre part d'un porte-outil (10), le plateau (1) étant mobile en déplacement et en rotation par rapport audit porte-outil (10).

2. Ensemble robotique selon la revendication 1 **caractérisé en ce que** les deux premiers axes motorisés (2, 3) sont reliés par un premier bras (6) de longueur inférieure aux deux bras (7, 8) suivants.

3. Ensemble robotique selon la revendication 2 **caractérisé en ce que** la longueur du premier bras (6) est comprise entre 20 et 40 millimètres et la longueur des deux bras (7, 8) suivants est comprise entre 80 et 160 millimètres, pour une table d'une dimension comprise entre 200x200 millimètres et 400x400 millimètres.

4. Ensemble robotique selon la revendication 1 **caractérisé en ce que** les longueurs des trois bras (6 à 8) sont inégales et déterminées de façon à ce que 'outil travaille au voisinage d'un point d'intérêt, ledit point étant situé sur un cercle de rayon égal à la distance entre les deux premiers axes divisée par racine carré de 2 et de centre le premier axe (2).

5. Ensemble robotique selon la revendication 1 **caractérisé en ce que** ladite chaîne cinématique de déplacement du plateau est constituée de quatre articulations rotoïdes motorisées (2 à 5) parallèles en série permettant la définition d'un point d'intérêt pour le positionnement fin.

6. Ensemble robotique selon la revendication 4 **caractérisé en ce qu'**il comporte des moyens pour commander les axes motorisés (2 à 5) selon une séquence comprenant un positionnement grossier de l'objet au voisinage du point d'intérêt, puis l'orientation de l'objet supporté par le plateau (1) par rotation instantanée autour d'un axe passant par le point d'intérêt en commandant les quatre axes de rotation motorisés (2 à 5) puis à configurer le bras porte-outil (10) en position de réglage fin en amenant le premier bras (6) à + pi/4 ou - pi/4 par rapport au point d'intérêt, puis à bloquer mécaniquement les axes terminaux (3, 4) et à effectuer le réglage fin en actionnant uniquement les deux premiers axes (2, 3).

7. Ensemble robotique selon la revendication 6 **caractérisé en ce qu'**il comporte des moyens pour commander ladite étape de réglage fin de façon à assurer le passage par un point d'harmonisation ou par une calibration locale.

8. Ensemble robotique selon l'une quelconque des revendications précédentes **caractérisé en ce que** les ensembles motoréducteurs des deux derniers axes (4) et (5) sont équipés de freins mécaniques ou électromagnétiques ou de tout autre dispositif permettant de solidariser les deuxième et troisième bras (7, 8) et le plateau (1).

9. Ensemble robotique selon l'une quelconque des revendications précédentes **caractérisé en ce que** l'axe (10) de déplacement de l'outil est perpendiculaire à la surface du plateau (1).

10. Ensemble robotique selon l'une quelconque des revendications précédentes **caractérisé en ce que** différents outils peuvent être positionnés sur des points d'intérêt d'un cercle centré sur le premier axe (2) et de rayon égal à L/racine de 2, où L désigne la longueur du premier bras (6),

## Patentansprüche

1. Robotergruppe, umfassend:
- eine Platte (1), die mit festen Befestigungsmitteln eines gemäß einer Ausrichtung und einer vorbestimmten Position XY mit einer räumlichen Auflösung und einer Wiederholbarkeit von weniger als 0,34 Ausrichtungsbogenminuten und 5 Mikron in der Position zu positionierenden Objekts,
- vier motorisierte parallele Rotationsachsen (2 bis 5), die zu zweit durch drei Arme (6 bis 8) gemäß einer kinematischen Serienkette verbunden sind, wobei die Platte (1) durch die Endachse (5) gestützt wird
- ein Gerüst (9), das einerseits fest mit der ersten motorisierten Rotationsachse (2) und andererseits mit einem Werkzeugträger (10) verbunden ist, wobei die Platte (1) mobil in Verschiebung und in Rotation im Verhältnis zu dem genannten Werkzeugträger (10) ist.

2. Robotergruppe gemäß Anspruch 1, **dadurch gekennzeichnet, dass** die zwei ersten motorisierten Achsen (2, 3) durch einen ersten Arm (6) in einer kürzeren Länge als die zwei folgenden Arme (7, 8) verbunden sind.

3. Robotergruppe gemäß Anspruch 2, **dadurch gekennzeichnet, dass** die Länge des ersten Arms (6) zwischen 20 und 40 Millimeter und die Länge der zwei folgenden Arme (7, 8) zwischen 80 und 160 Millimeter bei einem Tisch mit einer Abmessung inbegriffen ist, die zwischen 200 x 200 Millimetern und 400 x 400 Millimetern inbegriffen ist.

4. Robotergruppe gemäß Anspruch 1, **dadurch gekennzeichnet, dass** die Längen der drei Arme (6 bis 8) ungleich und derart bestimmt sind, dass das Werkzeug in der Nähe eines wichtigen Punktes arbeitet, wobei der genannte Punkt sich auf einem Radiuszirkel gleich der Entfernung zwischen den zwei ersten Achsen, der durch die Quadratwurzel von 2 geteilt ist, und dem Zentrum der ersten Achse (2) befindet.

5. Robotergruppe gemäß Anspruch 1, **dadurch gekennzeichnet, dass** die genannte kinematische Verschiebungskette der Platte aus vier in Serie parallelen motorisierten Drehgelenken (2 bis 5) gebildet ist, die die Definition eines wichtigen Punktes für die Endpositionierung zulassen.

6. Robotergruppe gemäß Anspruch 4, **dadurch gekennzeichnet, dass** sie Mittel zum Steuern der motorisierten Achsen (2 bis 5) gemäß einer Sequenz umfasst, umfassend eine grobe Positionierung des Objekts in der Nachbarschaft des wichtigen Punktes, dann die Ausrichtung des von der Platte (1) gestützten Objekts per sofortiger Rotation rund um eine Achse, die durch den wichtigen Punkt hindurchläuft, durch Steuern der vier motorisierten Rotationsachsen (2 bis 5), dann die Konfiguration des Werkzeugträgerarms (10) in der Endeinstellposition durch Führen des ersten Arms (6) auf + Pi/4 oder - Pi/4 im Verhältnis zum wichtigen Punkt, dann mechanisches Sperren der Terminalachsen (3, 4) und Durchführung der Endeinstellung durch Betätigen nur der zwei ersten Achsen (2, 3).

7. Robotergruppe gemäß Anspruch 6, **dadurch gekennzeichnet, dass** sie Mittel zum Steuern der genannten Endeinstellstufe derart umfasst, dass der Übergang durch einen Harmonisierungspunkt oder durch eine lokale Kalibrierung gewährleistet ist.

8. Robotergruppe gemäß einem der voranstehenden Ansprüche, **dadurch gekennzeichnet, dass** die Getriebemotorgruppen der zwei letzten Achsen (4) und (5) mit mechanischen oder elektromechanischen Bremsen oder jeder anderen Art von Vorrichtung ausgerüstet sind, die die feste Befestigung des zweiten und dritten Arms (7, 8) und der Platte (1) erlauben.

9. Robotergruppe gemäß einem der voranstehenden Ansprüche, **dadurch gekennzeichnet, dass** die Verschiebungsachse (10) des Werkzeugs lotrecht zur Fläche der Platte (1) ist.

10. Robotergruppe gemäß einem der voranstehenden Ansprüche, **dadurch gekennzeichnet, dass** verschiedene Werkzeuge auf wichtigen Punkten eines auf der ersten Achse (2) zentrierten Kreises mit einem Radius von gleich L/Wurzel aus 2 positioniert sein können, wobei L die Länge des ersten Arms (6) bezeichnet.

## Claims

1. A robotic assembly comprising:
- a plate (1) provided with means for securing an object to be positioned with a predetermined orientation and a position XY, with a spatial resolution and a repeatability with variations of less than 0.34 minutes of arc in terms of orientation and less than 5 microns in terms of position,
- four parallel motor-driven axes of rotation (2 to 5) connected together, two-by-two, by means of three arms (6 to 8) in a serial kinematic chain, with the plate (1) being supported by the extremal axis (5)
- a frame (9) secured, on the one hand, to the first motor-driven axis of rotation (2) and on the other hand, to a tool holder (10), with the plate (1) being movable and rotatable relative to said tool-holder (10).

2. A robotic assembly according to claim 1, **characterized in that** the first two motor-driven axes (2, 3) are connected by a first arm (6) having a length smaller than the following two arms (7, 8).

3. A robotic assembly according to claim 2, **characterized in that** the length of the first arm (6) ranges from 20 to 40 millimeters and the length of the following two arms (7, 8) ranges from 80 to 160 millimeters, for a table having a size between 200x200mm and 400x400mm.

4. A robotic assembly according to claim 1, **characterized in that** the lengths of the three arms (6 to 8) are unequal and so determined that the tool works in the vicinity of a point of interest, with said point being located on a circle having a radius equal to the distance between the first two axes divided by the square root of 2 and having the first axis (2) as a center.

5. A robotic assembly according to claim 1, **characterized in that** said plate moving kinematic chain consists of four parallel motor-driven rotary joints (2 to 5) in series enabling the definition of a point of interest for a fine positioning.

6. A robotic assembly according to claim 4, **characterized in that** it comprises means for controlling the motor-driven axes (2 to 5) in a sequence comprising a rough positioning of the object in the vicinity of the point of interest, then the orientation of the object supported by the plate (1) through an instantaneous rotation about an axis passing through the point of interest while controlling the four motor-driven axes of rotation (2 to 5), then configuring the tool-holder arm (10) in a position of a fine adjustment by bringing the first arm (6) to +pi/4 or -pi/4 relative to the point of interest, and then mechanically locking the terminal axes (3, 4) and performing the fine adjustment by actuating the first two axes (2, 3) only.

7. A robotic assembly according to claim 6, **characterized in that** it comprises means for controlling said step of fine adjustment so as to ensure the passage through a point of harmonization or a local calibration.

8. A robotic assembly according to any one of the preceding claims, **characterized in that** the geared motors of the last two axes (4) and (5) are equipped with mechanical or electromagnetic brakes or any other device making it possible to secure the second and third arms (7, 8) and the plate (1).

9. A robotic assembly according to any one of the preceding claims, **characterized in that** the tool axis of movement (10) is perpendicular to the surface of the plate (1).

10. A robotic assembly according to any one of the preceding claims, **characterized in that** various tools may be positioned at points of interest of a circle centered on the first axis (2) and having a radius equal to L/square root of 2, where L denotes the length of the first arm (6).
